# EUROPÄISCHE PATENTSCHRIFT

(11) **EP 1 301 974 B1**
(45) Veröffentlichungstag und Bekanntmachung des Hinweises auf die Patenterteilung: **19.03.2008**
(21) Anmeldenummer: 01962807.2
(22) Anmeldetag: 30.06.2001
(51) Int. Cl.: H02J 7/32, H02J 9/06

(54) **WINDENERGIEANLAGE MIT EINER NOTSTROMVERSORGUNGSEINRICHTUNG**
WIND POWER PLANT WITH AN EMERGENCY POWER SUPPLY DEVICE
EOLIENNE AVEC UN DISPOSITIF D'ALIMENTATION DE SECOURS

(30) Priorität: 07.07.2000 DE 10033029
(43) Veröffentlichungstag der Anmeldung: 16.04.2003
(60) Teilanmeldung: 06123062.9
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/007508
(87) Internationale Veröffentlichungsnummer: WO 2002/005406

(56) Entgegenhaltungen:
- DE-A- 19 618 039
- DE-A- 19 755 499
- US-A- 5 907 192

## Beschreibung

Es ist bekannt, bei Windenergieanlagen für bestimmte Teile eine Notstromversorgung mittels Akkumulatoren, insbesondere Blei-Akkumulatoren vorzusehen, damit für den Fall eines Stromausfalls die Windenergieanlage so in Position gebracht werden kann, daß keine Schäden an der Windenergieanlage eintreten. Blei-Akkumulatoren werden beispielsweise für die Notstromversorgung der Blattverstellung verwendet, so daß für den Fall eines Stromausfalls (z.B. durch einen Kurzschluß im Versorgungssystem) die Blätter der Windenergieanlage so verstellt werden können, daß der gesamte Windenergieanlagen-Rotor zum Stillstand gebracht wird und keinen wesentlichen Antrieb aus der Windenergie mehr erfährt. Auch kann es notwendig sein, die Windenergieanlagen-Gondel "aus dem Wind" zu drehen, wozu ebenfalls Blei-Akkumulatoren als Notstromversorgungseinrichtung verwendet werden können.

Der Nachteil von Blei-Akkumulatoren liegt aber darin, daß sie relativ schwer sind, sehr viel Platz benötigen und daß Blei-Akkumulatoren nicht unbegrenzt oft auf- und entladen werden können. Auch nehmen die Auflade- und Entladeeigenschaften der Blei-Akkumulatoren mit der Zeit ab, und außerdem benötigen Akkumulatorenspeicher eine relativ aufwendige Wartung, so dass sie die Kosten einer Windenergieanlage bzw. deren Betrieb erhöhen.

Aus US 5,907,192 ist es bekannt, die in einem Gleichspannungszwischenkreis eines Umrichters gespeicherte Energie einem Steuerungssystem zur Steuerung der Pitchverstellung eines Rotorblattes zuzuführen, um somit die Rotorblätter zu verstellen und um dabei die in dem Rotor einer Windenergieanlage gespeicherte Rotationsenergie für die Pitchverstellung der Rotorblätter einzusetzen. US 5, 907,192 offenbart die Merkmale des Oberbegriffs des Anspruchs 1.

Aus Elektrizitätswirtschaft, Jg. 1994 (1995), Heft 14, Seiten 842 bis 845 sind verschiedene Stromspeicher für die Energieversorgung bekannt. Hierbei werden auch elektrische Speicher vorgestellt, die in Kraftwerken, abgesehen von ihrer Funktion als Notstromversorgung für den Lastausgleich und die Bereitstellung von Sekundenreserven eingesetzt werden, womit die Ausnutzungsdauer der Energieerzeugungsanlagen verbessert wird. Erwähnt werden in diesem Zusammenhang auch Doppelschichtkondensatoren.

Aus DE 196 51 364 A1 ist eine Vorrichtung zur Verbesserung der Neizverträglichkeit von Windkraftanlagen mit Asynchrongeneratoren bekannt, wobei dem öffentlichen Versorgungsnetz dabei eine elektronisch gesteuerte Einrichtung parallel geschaltet ist, die einen Energie-Zwischenspeicher beinhaltet, wobei als eine Möglichkeit des Zwischenspeichers auch eine Kapazität erwähnt ist.

Aufgabe der Erfindung ist es, die vorgenannten Nachteile zu vermeiden.

Die Aufgabe wird durch die Erfindung mit den Merkmalen nach Anspruch 1 gelöst.

Die Erfindung schlägt im Wesentlichen vor, statt eines Akkumulators nunmehr einen Kondensator, insbesondere einen Kondensator vom "UltraCap"-Typ, für verschiedene Anwendungen bei einer Windenergieanlage einzusetzen.

Der besondere Vorteil von Kondensatoren liegt in der Wartungsfreiheit und der unbegrenzten Menge an Lade- und Entladungsvorgängen im Gegensatz zu herkömmlichen Akkumulatoren bzw. Batterien.

Besonders vorteilhaft geeignet ist ein Kondensator, wie er von der Firma Siemens Matsushita Components GmbH Co. KG unter der Bezeichnung "UltraCap" sowie der Artikel-Nr. B48710-A0283-Q035 hergestellt wird. Dieser Kondensator verfügt über folgende technische Daten:

| | | |
|---|---|---|
| (Nenn-)Kapazität CR (DCC⁽¹⁾, 25°C): | 2,8 F | |
| Kapazitätstoleranz: | -10...+30% | |
| (Nenn-)Spannung UR | 75 V | |
| Leistung⁽²⁾ | 578 W/kg | 756 W/I |
| Max. Lade-/Entladestrom I_{c} (25°C) | 25 A | |
| Gespeicherte Energie (bei U_{R}) | 7875 J | |
| Spezifische Energie (bei U_{R} | 1,09 Wh/kg | 1,43 Wh/I |
| Stoß-Spannung | 88 V | |
| Max. Leckstrom I_{LC} (12h, 25°C) | 4 mA | |
| Max. Serienwiderstand ESR^{DC}(DCC, 25°C) | 800 mΩ | |
| Max. Serienwiderstand ESR^{HF}(1kHz, 25°C) | 480 mΩ | |
| Gewicht | 2 kg | |
| Volumen | 1,5 I | |
| Betriebstemperatur | -25...+65 °C | |
| Speichertemperatur | -35... + 65 °C | |
| Lebensdauer | 180000 h | |
| (25°C, UR) | | |
| Höhe x Breite x Länge | 70 x 70 x 312 mm | |

| | | |
|---|---|---|
| (1) DCC: Entladung mit konstantem Strom (2) Entladung von UR nach UR/2 mit IC = 25A | | |

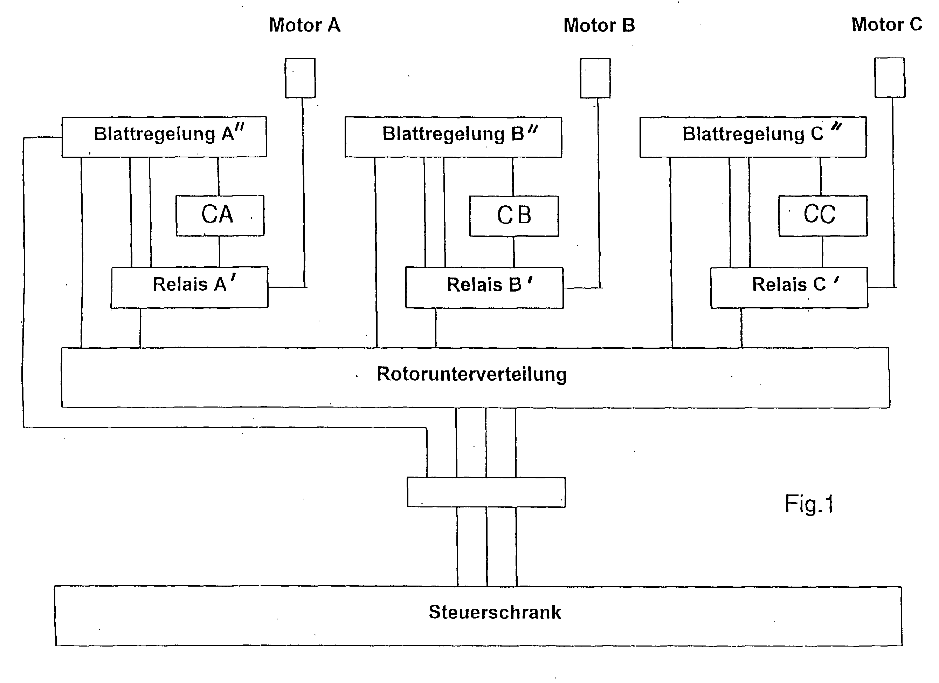

Fig. 1 zeigt das Prinzip-Bild der Rotorblattverstellung einer Windenergieanlage. Da der Rotor der Windenergieanlage über drei Rotorblätter verfügt und jedes einzelne Rotorblatt auf einen gewünschten Anstellwinkel eingestellt (eingeregelt) werden kann, ist für jedes einzelne Rotorblatt ein Verstellmotor A, B oder C vorgesehen, weicher über ein Relais A', B' oder C' angesteuert wird. Die Blattregelungseinrichtung A", B" oder C" erhält von einer Steuereinrichtung (Steuerschrank) ihre Werte und muß im Fall einer Notabschaltung, beispielsweise verursacht durch einen Kurzschluß in der Windenergieanlage oder deren Stromversorgungseinrichtung noch eine Blattverstellung vornehmen, so daß die jeweiligen Rotorblätter des Rotors aus dem Wind "gedreht" werden, d.h. daß sie keinen Antrieb mehr auf den Rotor erzeugen. Die hierfür benötigte Energie wird durch die Kondensatoren CA, CB und CC bereitgestellt. Zum Laden dieser Kondensatoren im Normalbetrieb sind diese mit einem Anschluß (nicht dargestellt) versehen, so daß die (aufgeladenen) Kondensatoren stets ausreichend Energie bereitstellen, um die Rotorblätter auf einen gewünschten Anstellwinkel einzustellen, falls dieses notwendig ist. Da die Kondensatoren in ihren Ausführungen sehr klein sind, können sie unmittelbar an den Verstellmotoren positioniert werden und auch von diesen gehalten werden.

Es ist vorteilhaft, statt eines einzelnen Kondensators mehrere Kondensatoren in Parallelschaltung vorzusehen, so daß stets eine ausreichende Notstromkapazität zur Verfügung gestellt werden kann.

## Patentansprüche

1. Windenergieanlage
- mit einem Kondensatorspeicher als Notstromversorgungseinheit,
- mit einem Rotorblatt,
- mit einem Verstellmotor zum Verstellen des Rotorblatts,
- die so eingerichtet ist, dass der Kondensatorspeicher im Normalbetrieb aufgeladen wird,
**dadurch gekennzeichnet, dass**
- die Windenergieanlage so eingerichtet ist, dass im Kondensatorspeicher ausreichend elektrische Energie gespeichert wird, damit der Kondensatorspeicher im Fall einer Notabschaltung der Windenergieanlage die benötigte Energie liefert, um das Rotorblatt so aus dem Wind zu drehen, dass es keinen Antrieb mehr auf den Rotor erzeugt,
- der Kondensatorspeicher am Verstellmotor positioniert ist.

## Claims

1. Wind power installation
- with a capacitor storage system as an emergency power supply unit,
- with a rotor blade,
- with an adjusting motor for adjusting the rotor blade,
- which wind power installation is set up in such a manner that the capacitor storage system is charged up in normal operation,
**characterised in that**
- the wind power installation is set up in such a manner that sufficient electrical energy is stored in the capacitor storage system for the capacitor storage system to supply, in the event of emergency shut-down of the wind power installation, the energy required to turn the rotor blade out of the wind such that the rotor blade no longer produces a driving effect on the rotor,
- the capacitor storage system is positioned at the adjusting motor.

## Revendications

1. Installation d'énergie éolienne
- avec un condensateur accumulateur comme unité d'alimentation de secours,
- avec une pale de rotor,
- avec un servomoteur servant à déplacer la pale de rotor,
- laquelle est conçue de sorte que le condensateur accumulateur soit chargé en fonctionnement normal,
**caractérisée en ce que**
- l'installation d'énergie éolienne est conçue de sorte que le condensateur accumulateur emmagasine suffisamment d'énergie électrique pour que le condensateur accumulateur fournisse l'énergie nécessaire à l'installation d'énergie éolienne en cas d'arrêt d'urgence afin de faire tourner la pale de rotor hors du vent de façon qu'elle ne génère plus aucun entraînement sur le rotor,
- le condensateur accumulateur est positionné au niveau du servomoteur.
